# EUROPÄISCHE PATENTANMELDUNG

(11) **EP 3 789 349 A1**
(43) Veröffentlichungstag der Anmeldung: **10.03.2021**
(21) Anmeldenummer: 20194897.3
(22) Anmeldetag: 07.09.2020
(51) Int. Cl.: C02F 1/36, C02F 1/46, C02F 103/02, B06B 1/06, H05H 1/24, B01J 19/10

(54) **VORRICHTUNG UND VERFAHREN ZUR BEHANDLUNG VON FLÜSSIGKEITEN ODER SUSPENSIONEN MITTELS ULTRASCHALL UND PLASMA**

(30) Priorität: 06.09.2019 DE 102019123990
(71) Anmelder: PRE Power Recycling Energyservice GmbH, 17033 Neubrandenburg Mecklenburg-Vorpommern (DE)
(72) Erfinder: ROSSOW, Norbert, 17217 Penzlin (DE)
(74) Vertreter: Wehlan, Helmut

(57) **Zusammenfassung**

Die Erfindung betrifft eine Vorrichtung und ein Verfahren zur Behandlung von Flüssigkeiten oder Suspensionen mittels Ultraschall und ggf. gleichzeitig mit Plasma, umfassend mindestens ein Gerät zur Ultraschall-Erzeugung und ggf. ein Gerät zur Erzeugung eines Plasmas, dadurch gekennzeichnet, dass innerhalb der Vorrichtung, in dem die Behandlung stattfindet ein Hauptreaktionsraum gebildet wird, der der so gestaltet ist, dass mindestens eine Raum-Dimension des Hauptreaktionsraums, die senkrecht zur Strömungsrichtung verläuft, dem Doppelten der Dimension in Strömungsrichtung entspricht, wobei die Ultraschallerzeugenden und ggf. Plasma-erzeugenden Geräte mit der zu behandelnden Suspension und / oder Flüssigkeit in direktem Kontakt stehen oder die Vorrichtung zur Ultraschall-Erzeugung und die Vorrichtung zur Erzeugung eines Plasmas auf denselben Bereich einer strömenden Flüssigkeit gerichtet ist und in die zu behandelnden Flüssigkeiten oder Suspensionen hineinragen.

## Beschreibung

### Technischer Hintergrund

Die Erfindung betrifft eine Vorrichtung und ein Verfahren zur Behandlung von Flüssigkeiten oder Suspensionen mittels Ultraschall und ggf. gleichzeitig mit einem Plasma, umfassend mindestens eine Vorrichtung (Gerät) zur Ultraschall-Erzeugung und optional zusätzlich eine Vorrichtung (Gerät) zur Erzeugung eines Plasmas, dadurch gekennzeichnet, dass das Gerät zur Ultraschall-Erzeugung und ggf. das Gerät zur Erzeugung eines Plasmas auf denselben Bereich einer strömenden Flüssigkeit oder Suspension gerichtet ist oder in die zu behandelnden Flüssigkeiten oder Suspensionen hineinragen. Eine bevorzugte Ausführungsform ist ein spezieller Raum innerhalb der Vorrichtung, auch Hauptreaktionsraum genannt, in dem die Behandlung stattfindet, der der den Vorteil hat, dass die Intensität des Ultraschalls durch die Überlagerung der Hauptschall-Ausbreitungszone bzgl. der größten Amplitude des Schwingungskörpers erhöht wird und der so gestaltet ist, dass mindestens eine Raum-Dimension des Hauptreaktionsraums, die parallel zur Strömungsrichtung verläuft, dem Doppelten der Dimension senkrecht zur Strömungsrichtung entspricht, in dem die Behandlung durchgeführt wird, wobei die Ultraschall-erzeugenden und ggf. Plasma-erzeugenden Geräte mit der zu behandelnden Suspension und / oder Flüssigkeit in direktem Kontakt stehen. Es erfolgt hier die Einwirkung der Plasmaentladungszone in die Ultraschall-Hauptausbreitungszone. Es entsteht vorzugsweise durch die räumliche Überlagerung der Hauptreaktionsraum beider Energie-Quellen. Durch diese Gestaltung werden die sonotechnischen Reaktionen aus der Ultraschalleinwirkung verstärkt, da die Ultraschall-Intensität in der sich räumlich überlagernden Hauptausbreitungszone mehrerer Ultraschallerreger/Sonden/Transducer erhöht wird. Ultraschallintensität und die Verweilzeit von Substratpartikeln oder Molekülen sind die Hauptfaktoren für die Steigerung von sonotechnischen Reaktionen/Effekten. Da es sich hier um ein Strömungsrohr besonderer Gestaltung handelt, kommen auch die Vorteile der Ultraschall Wirkung gegenüber einem Rührkessel zum Tragen . Darüber hinaus erfolgt durch räumliche und damit auch energetische Integration der Plasmaentladungszone in die Ultraschallhauptausbreitungszone eine Verstärkung der Plasmachemischen Reaktionen.

Die Erfindung dient zur Optimierung der Aufbereitung von Flüssigkeiten und Suspensionen. Weltweit werden zunehmend Anlagen zur Aufbereitung und Vorbehandlung von Abwässern und Fluids aus Anlagen zur Behandlung organischer Abfälle und Produkte mit Ultraschall-Geräten ausgerüstet, um die Effizienz im Gegensatz zu anderen Verfahren zu steigern. Plasma-Verfahren für die o.g. Zwecke sowie zur Aufspaltung von Schadstoffen in Abwässern und industriellen Rückständen werden in vielen Bereichen der Forschung und der Wirtschaft erforscht und entwickelt. All diese Entwicklungen sowohl im Bereich der Ultraschall-Forschung und Anwendung sowie der Erprobung von Plasmaverfahren haben die Grenzen dieser etablierten bzw. neu entwickelten Verfahren gegenüber den zukünftigen Anforderungen im Abwasserbereich kommunal wie industriell gezeigt. Internationale Forschungsergebnisse weisen daraufhin, dass die Kombination der modernen Verfahren auf der Basis von Ultraschall- und Plasma-Einsatz eine überproportionale Steigerung der Effekte erzielen lässt. Um dies umzusetzen, hat sich die vorliegende Erfindung die Aufgabe gestellt, für diese Kombination eine entsprechende Vorrichtung zu entwickeln, welche nicht nur die Kombination in einem Gerät sondern auch die Steigerung der Effizienz der Behandlung durch Konzentration der Wirkeinflüsse und die Verminderung von Fehleinflüssen und die Anpassung des Systems an unterschiedliche Erfordernisse der Systemdruckgestaltung zu schaffen.

Wasser ist ein elementarer Bestandteil des Lebens. Weltweit haben 2,2 Milliarden Menschen keinen Zugang zu sauberem Wasser (https://www.unicef.de/informieren/aktuelles/blog/weltwasserwoche-2019-zehn-fakten-ueber-wasser/172968). Davon sind vor allem Menschen oder Familien in den ärmeren Regionen der Welt betroffen. Die Belastung mit Krankheitskeimen ist ein substantielles globales Problem in der Medizin, der Biotechnologie und der Lebensmittelindustrie sowie beim Umweltschutz. Die Häufigkeit von tödlichen Infektionen wird von dem Berlin-Institut für Bevölkerung und Entwicklung weltweit mit ca. 15 Millionen pro Jahr angegeben (https://www.berlin-institut.org/online-handbuchdemografie/entwicklungspolitik/infektionskrankheiten.html, abgerufen am 26. März 2020). Die mikroskopisch kleinen Keime sind heute für ein Drittel bis ein Viertel aller vorzeitigen Todesfälle weltweit verantwortlich. Auch wenn nicht alle Infektionskrankheiten tödlich verlaufen, haben sie doch enorme Auswirkungen. So wird der Schaden, den allein die saisonale Grippe der US-Wirtschaft durch den Ausfall von Arbeitskraft und durch den Aufwand für die Behandlung zufügt, auf insgesamt 90 Milliarden US-Dollar jährlich geschätzt (https://wasserhelden.net/unsertrinkwasser/inhaltsstoffe/viren/(24.02.2020)).

Eine spezielle Ausführungsform der unten näher beschriebene Erfindung betrifft ein speziell gestaltetes Reaktionsraum-System zur konzentrierten Einbringung von Ultraschall und Plasma in einen speziellen Bereich der Vorrichtung. Dieses dient der konzentrierten Anordnung von Elektroden und Sonotroden zur Behandlung von Suspensionen und Flüssigkeiten mittels Ultraschall / Plasma in einem Raum als Haupt-Reaktionsraum, der so geformt ist, eine große Energiedichte aus mehreren Ultraschallerregern / Plasmaquellen zu erzeugen.

### Stand der Technik

Die in der Praxis derzeitig angewendeten Verfahren zur Behandlung von Suspensionen im Durchfluss bzw. semikontinuierlichen Durchfluss bzw. Gegenstrom-Durchfluss-Verfahren unterscheiden sich erheblich bzgl. der Energieeffizienz der Behandlungsziele.

Weit verbreitet in der Anwendung des Ultraschalls in flüssigen bzw. fließfähigen Medien und Stoffen sind Ultraschallgeräte bzw. Systeme, die auf indirekter Beschallung durch auf Trägerflächen aufgebrachte Schwinger bzw. Schwinggebilde, welche einen indirekten Eintrag in die Behandlungsstoffe und deren Ströme im fließenden bzw. deren Behälter im Batchverfahren ausüben.

Verfahren bzw. Geräte, die mit direktem Kontakt zu den zu behandelnden flüssigen bzw. fließfähigen Medien arbeiten, haben zu den Schwingkörpern des Ultraschall-Bauteils ein Anströmungs- bzw. Umströmungs-System aus Kammern oder Rohrleitungen, welche die zyklische oder kontinuierliche Beschallung ermöglichen.

Bei diesen derzeitig etablierten Verfahren und Geräten der indirekten Beschallung ist die Effizienz der Behandlung für verschiedene Verfahren der z.B. Oberflächen-Behandlung bzw. Reinigung bei technischen Anwendungen in der Medizin und der Behandlung von kleinteiligen Instrumenten etc. ausreichend effizient.

Bei Verfahren mit großen zu behandelnden Volumenströmen und hohen Anforderungen bzgl. der stofflichen Desintegration haben diese Verfahren klare Nachteile gegen über den direkt in der Suspension arbeitenden Verfahren und Geräten.

Geräte der Ultraschallbehandlung mit direktem Schalleintrag in die Suspension haben eine Position erreicht, welche sie anderen Verfahren zur Desintegration in der Abwasserbehandlung und der Gärrestbehandlung deutlich energieeffizienter und wirkungsvoller nutzbar machen.

Bei großen zu behandelnden Volumenströmen wie in Abwasserbehandlungs- und anaeroben Vergärungsanlagen gibt es derzeitig große Defizite bzgl. der Aufspaltung von Schadstoffen und organischen Inhaltsstoffen. Die Effizienz der vorhandenen Technik und Systeme reicht nicht für die zukünftigen Aufgaben der Behandlung von Schadstoffen und Giften im humanen wie industriellen Abwasser auf wirtschaftlicher Basis.

Die Überwachung von Trinkwässern unterliegt einschlägigen Verordnungen. Trinkwasser muss stets aus hygienischer Hinsicht dauerhaft von einwandfreier Beschaffenheit sein. Dazu gibt es im Rahmen der Wasserversorgung je nach Anforderungsfall die unterschiedlichsten Desinfektionsmaßnahmen.

So kommt in der chemischen Desinfektion größtenteils chlorhaltige Verbindungen zum Einsatz (Chlor, Chlordioxid, oder Natrium- und Calciumhypochloritlösungen). Dessen Wirkung ist besonders gut gegen Bakterien, Keimen und Viren nachgewiesen. Nachteilig bei dieser Variante ist allerdings die fehlende Wirksamkeit gegen Pilze und dessen Sporen (W. Bodenschatz (2012): Kompaktwissen Desinfektion : Das Handbuch für Ausbildung und Praxis. Hamburg: Behr's Verlag DE). In seltenen Fällen wird Ozon in der Trinkwasserhygiene verwendet, welches einen hohen Wirkungsgrad gegen Viren, Bakterien, Keimen und Pilzen aufweist. Nachteilig hier sind allerdings die auftretenden Rückstände wie Bromat, Chlorat und Trihalogenmethane (THM), welche sich gesundheitsschädlich auf den menschlichen Organismus auswirken können (https://www.umweltbundesamt.de/themen/wasser/schwimmen-baden/schwimmbadebecken/wasserqualitaet-der-schwimm-badebecken#desinfektionsnebenprodukte, Wasserqualität der Schwimm- und Badebecken. Umweltbundesamt, 13. November 2013, abgerufen am 11. Februar 2020.). Die thermische Desinfektion kommt größtenteils in Warmwasseraufbereitungssystemen zur Legionellenbekämpfung zum Einsatz. Es wird dabei zwischen vorbeugenden thermischen Desinfektion und der thermischen Desinfektion unterschieden². Auch Membranen zur Entfernung von Mikroorganismen kommen immer mehr zum Einsatz. Mit einer Porengröße von kleiner als 0,2 µm, lassen sich mit Mikro- und Ultrafiltration Bakterien und bis zu einem gewissen Grad Viren herausfiltern. In der Praxis werden aus Sicherheitsgründen, UV-Anlagen hinter den Ultrafiltrationsanlagen nachgeschaltet (H. Goebel (2006): Entwicklung einer Benchmarking-Methode für die Bewertung der Verbesserung von Gewässerstrukturen an Fließgewässern. München: Oldenbourg Industrieverlag.). Ein physikalischer Prozess zur Wasserbehandlung ist die Bestrahlung mit UV-Licht. Wegen dessen geringer Eindringtiefe gilt diese Methode nicht als Sterilisations-, sondern als Desinfektionsmethode. Als Mikrobizid wirksam wird der Wellenlängenbereich von 315-200 nm angegeben, mit einem Wirkungsoptimum im UV-C-Bereich. Der Vorteil bei diesem Verfahren besteht darin, dass keine chemischen bzw. gesundheitsgefährdenden Nebenprodukte entstehen². Voraussetzung allerding ist ein trübstofffreies Wasser und eine geringe mikrobielle Belastung, dass eine Behandlung von Abwässern prinzipiell ausschließt.

Weitere Behandlungsmethoden basieren auf der Ultraschalltechnologie. Ultraschallwellen bewirken infolge der Kavitation ausgelöste Scherkräfte und unterstützen durch Mikroimplosion eine deutliche Keimreduktion (Hansup Nam-Koong, J.P. Schroeder, G. Petrick, C. Schulz, "Wasseraufbereitung und -entkeimung in Aquakultur-Kreislaufsystemen mittels Ultraschall-induzierter Kavitation", 6. Büsumer Fischtag, 11.06.2015, Büsum). Die Behandlung von Phyto- und Zooplankton (Pavlova viridis, Tetraselmis chui, Rhodomonas baltica, Haematococcus pluvialis, Haematococcus pluvialis Cyst., Paramecium caudatum, Brachionus plicatilis, Artemia salina und Acartia tonsa) führte zu einer Halbierung der Photosyntheseaktivität bzw. Zahl der lebenden Organismen innerhalb von wenigen Sekunden. Aber auch die sonochemischen Effekte bewirken durch Radikalbildung eine Reduktion von 2-methylisoborneol (MIB) und Geosmin (GSM) in Aquakulturwasser.

Durch die Anwendung von physikalischen Plasmen konnte der Abbau pharmazeutischer Wirkstoffe gezeigt werden. Im und am Wasser erzeugte Entladungen können sehr effektiv bei problematischen Kontaminationen z.B. in der Trinkwasseraufbereitung eingesetzt werden. Gerade biologisch nur schwer abbaubare Stoffe wie Medikamente oder Pestizide, verlangen nach neuen, effizienten Methoden. Plasmaverfahren stellen hier eine umweltschonende und kostengünstige Alternative dar, mit der nicht nur Mikroorganismen auch ohne den Einsatz von Chemikalien wie z.B. Chlor inaktiviert werden, sondern zudem chemische Schadstoffe aufgebrochen werden können (R. Banaschik, P. Lukes, H. Jablonowski, M. U. Hammer, K.-D. Weltmann, J. F. Kolb; "Potential of pulsed corona discharges generated in water for the degradation of persistent pharmaceutical residues" Water Research 84 (2015) 127e135).

Neben dem Abbau chemischer bzw. pharmazeutischer Kontaminationen konnte auch die Reduktion vom Keimzahlen durch plasmaphysikalische Behandlung demonstriert werden. So ist die Abtötung von Legionella pneumophila im Wasser mit gepulsten Koronaplasmen möglich (R. Banaschik, G. Burchhardt, K. Zocher, S. Hammerschmidt, J. F. Kolb, K.-D. Weltmann; "Comparison of pulsed corona plasma and pulsed electric fields for the decontamination of water containing Legionella pneumophila as model organism", Bioelectrochemistry 112 (2016) 83-90). Bei dieser Art von Plamen werden die Auswirkungen gepulster elektrischer Felder und die Erzeugung reaktiver Arten kombiniert. Die Elektroporation der Zellmembran verursacht durch die auftretenden elektrischen Felder kann die Aufnahme reaktiver Spezies wie H₂O₂ in die Legionellen begünstigen. Im Inneren der Zelle können die Radikale ihre zytotoxische Wirkung entfalten, was zu einer verstärkten Abtötung der Bakterien führt.

Für diese Anforderungen ist die unten bezeichnete Erfindung entwickelt.

### Patentliteratur

Für die Nutzung von Vorrichtungen zur Entkeimung oder Dekontamination von Flüssigkeiten auf Basis einzelner Ultraschall oder Plasmaverfahren sind von verschiedenen Akteuren eine Reihe von Patenten angemeldet worden (DE102012004835A1: Entkeimung von Flüssigkeiten mittels Ultraschall, Vorrichtung, Verfahren und Verwendung (2012); DE3844374A1: Verfahren zum Entfernen von bewegungsaktiven Mikroorganismen aus Wasser (1990); DE2555175A1: VERFAHREN UND VORRICHTUNG ZUM REINIGEN VON ABWAESSERN (1976) ; DE19709384C1: Verfahren zur Abwasserreinigung (Dabei werden im Abwasser Schwingungen im Frequenzbereich bis 40 kHz mit einer zur Entstehung von Kavitation geeigneten Leistung bis 50 W/l erzeugt.) (1998); DE20321588U1 (2008)/ DE10394301B4 (2011): Ultraschallreaktor (SONOTRONIC Nagel GmbH)). Die Kombination von Plasma- und Ultraschallverfahren wird in einem Patent zur Behandlung von Wunden (DE102009002278A1 (2009): Vorrichtung zum Erzeugen von nichtthermischem Plasma und Ultraschall-Pulsen) und in einer Offenlegungsschrift zur Desintegration von Suspensionen (DE19614240C1) beschrieben. Die Offenlegungsschrift wurde 2018 von den Projektpartnern PRE und INP zum Patent angemeldet (EP 3 603 812 A1: DEVICE AND METHOD FOR CHEMO-PHYSICAL MODIFICATION OF PARTICLES OF A SUSPENSION (2018)).

Zum Stand der Technik gehören auch die folgenden deutschen Patent- bzw. Offenlegungsschriften:

Die DE 102 30 897 A1 beschreibt thermohydraulische Schallquellen, die Kugelschalenförmige Elektroden besitzen, zwischen welchen die Kavitation erzeugt werden soll. Piezoelektrische angetriebenen Ultraschallschwinger werden dort nicht genannt. In DE 20 2012 010 605 U1 wird eine hochfrequente mechanische Schwingungsquelle offenbart, um Gase aufzuspalten und abzuführen. Sie dient der Gewinnung von Wasserstoff und Sauerstoff. Es wird keine piezoelektrisch erzeugte Schwingung über Booster und Horn erwähnt und keine direkt in einer strömenden Flüssigkeit wirkende Gestaltung.

Bei DE 10 2016 002 599 A1 handelt es sich um ein Verfahren zum Separieren von Feststoff Partikeln aus einer Flüssigkeit. Dies soll durch das Einbringen von nicht spezifizierten Schallwellen erfolgen. Die Schallwellen werden siehe Anspruch 2, quer zur Förderrichtung eingebracht, nicht gegen die Strömungsrichtung. In dieser Schrift geht es nicht um Aufschlüsse von Stoffen, sondern um das Separieren von Feststoffpartikeln.

WO 2014/181284 A1 beschreibt die Vergrößerung der Menge von Polyphenolen im Olivenöl bei dessen Herstellung mittels Ultraschalles. Dabei sind die Sonotroden nicht in der Flüssigkeit, sondern auf die "external Surface" auf der Außenseite angebracht.

DE 600 01 230 T2 (EP 1173387) offenbart ein Verfahren, das zum Desinfizieren und Reinigen von Flüssigkeiten und Gasen dient.

In EP 1 276556 B1 wird die Ultraschallbehandlung durch Ultraschall-produzierenden Transducer bzw. Wandler durchgeführt, die asymmetrisch um ein Liniensegment angeordnet sind. Der Frequenzbereich beträgt hauptsächlich 0,5 und 5 MHz, nicht um 20 kHz.

Teilweise zum Stand der Technik gehört auch die zum Prioritätszeitpunkt unveröffentlichte Druckschrift EP 3 603 812 A1. Dort werden Suspensionen mittels Ultraschall und Plasma behandelt. Eine besonders gestalteter Reaktionsraum wird dort nicht beschrieben.

### Aufgabe der Erfindung

Die Aufgabe der Erfindung bestand darin, die o.g. Nachteile der bekannten technischen Lösungen zu beseitigen.

Überraschenderweise hat sich herausgestellt, dass der Prozess der Desintegration und Behandlung von Suspensionen und Flüssigkeiten bzgl. Schadstoffen und organischen Inhaltsstoffen optimiert und einer wirtschaftlichen Lösung erreicht wurde.

Hierbei geht es vor allem darum, die großen Volumenströme der Abwasserbehandlungsanlagen und anaeroben Behandlungsanlagen einer Möglichkeit zur effizienten Aufspaltung und Nutzung der organischen Inhaltsstoffe sowie der Eliminierung von Schadstoffen durch Aufspaltung und Umwandlung zu unterziehen.

### Lösung der Aufgabe

Die Aufgabe wurde gemäß den Merkmalen der Patentansprüche gelöst.

Zur Lösung der Aufgabe wurde die bisherige Nutzung von bestehenden Ultraschalldesintegrationsanlagen und Systemen untersucht und analysiert.

Hieraus gab es zwei grundlegende Erkenntnisse:
Die Systeme mit indirekter Beschallung der Suspensionen sind in ihrer Wirkung und ihrem Wirkungsgrad für großtechnische Anwendungen nicht einsetzbar.

Der Energiebedarf bzgl. einer Wirkung auf das zu behandelnde Substrat ist bei kontinuierlichen Volumenströmen nicht wirtschaftlich darstellbar.

Die nachweisbare Wirkung ist ungenügend.

Systeme mit direkter Beschallung der Suspensionen sind in ihrer Wirkung den zuvor genannten um den Faktor zehn bis zwanzig überlegen.

Trotzdem sind diese Systeme nur in einem Teilstrom mit von der o.g. Zielstellung abweichender effizienter Wirkung derzeitig technisch einsetzbar.

Aus diesem Grunde war die Aufgabe, das System der direkten Beschallung von zu behandelnden Suspensionen bzgl. der gerätetechnischen Gestaltung und der möglichen Synergie mit anderen Desintegrationstechnologien zu untersuchen.

Das Ergebnis der Untersuchungen war, das vorhandene Systeme der Ultraschallbehandlung zur direkten Beschallung im Medium folgende verbesserungswürdige Eigenschaften präsentieren:
- aufwendige Gestaltung bzgl. der Durchströmung zur Erreichung von ausreichendem Energieeintrag, Energiedichte und Verweilzeit im Beschallungsbereich
- Probleme bei der Abführung entstehender bzw. ausscheidender Gase und deren Behinderung des hydraulischen Systems
- Probleme bzgl. Sedimentation und Verstopfung
- unzureichende Einsetzbarkeit zur Zersetzung von Schadstoffen in großen Volumenströmen

Das Ergebnis der Untersuchung alternativer Behandlungsmethoden mittels Plasmas brachte ähnliche Ergebnisse.

Durch die Koppelung beider Desintegrationssysteme wurde eine Synergie erzielt. Dies geht aus einzelnen Studien zur Kombination von Hochleistungsultraschall und Plasma in einem gemeinsamen Haupt-Reaktionsraum hervor.

Um diese Synergie zu erzielen, wurde ein spezieller Haupt-Reaktionsraum geschaffen, bei dem bei kontinuierlicher Durchströmung mit dem zu behandelnden Medium eine Abgrenzung des Reaktionsraumes in einem Gehäuse erfolgt. Dieses Reaktorgehäuse, das zur Aufnahme der Ultraschallschwinggebilde für die direkte Medienbeschallung in der Flüssigkeit bzw. der Suspension eine Hauptreaktionszone dient, führt dazu, dass sich die akustische Energie von ggf. mehreren Sonotroden konzentriert.

Der Haupt-Reaktionsraum der höchsten Energiedichte ist so platziert, dass die gesamte Menge der zu behandelnden Fluide zwangsläufig ohne Schlupf durch diesen Bereich des Reaktorgehäuses geführt wird.

Zusätzlich wird das Gehäuse für den oben bezeichneten Haupt-Reaktionsraum so gestaltet, das es zur Aufnahme der Plasma Elektroden geeignet ist.

Die Platzierung dieser erfolgt so, dass die Ausbreitungsrichtung der Plasmaentladung verstärkend für die Energiedichte des gemeinsamen Haupt-Reaktionsraum im Bereich der höchsten Energiedichte geführt wird und hier maßgeblich die Wirkung der Ultraschallreaktion verstärkt.

Für die Anpassung des Systems an große Volumenströme und die Erfordernis hoher Energieeintragung wird das System modular erweitert und die Reaktionsgefäße unmittelbar nebeneinander gekoppelt.

Gemäß einer bevorzugten Ausführungsform der Erfindung ist der Haupt-Reaktionsraum wie ein Kasten mit einem großen Verhältnis von Tiefe zu Höhe des Strömungsraumes von mindestens 1:3 und größer gestaltet. Die Anströmung erfolgt in der Richtung der Tiefen-Ausbildung des Raumes. Parallel zur Höhe des Strömungsraumes erfolgt die Fixierung der Schwingungsrichtung der Sonotroden mit der größten Amplitude. Das gleiche gilt für die Ausrichtung der Plasma Elektroden bzgl. der Richtung der Plasma Entladung.

Die Sonotroden des Ultraschallsystems wie auch die Elektroden für die Plasma Entladung sind so angeordnet, dass sie konzentrisch in ihrer Ausbreitungsrichtung des Ultraschalls und des Plasmas den Haupt-Reaktionsraum mit maximaler sich addierender Wirkenergiedichte bilden. Hierbei handelt es sich um Schall-Erreger, sogenannte Sonotroden, welche mit ihrem Horn direkt in die zu behandelnde Flüssigkeit hineinragen. Es sind sogenannte Stab-Sonotroden, die die Energieübertragung der akustischen Energie direkt in die Flüssigkeit ohne die Übertragung vom Schwingkörper über andere Bauteile oder durch Rohrwandungen in das zu behandelnde Substrat einleiten.

Durch diese Anordnung entsteht in Flüssigkeiten eine Reaktionszone vor dem Schwinggebilde in direkter Ausrichtung zur Längsachse des Schwingkörpers. Somit entsteht ein Hauptreaktionsraum unmittelbar am Ende des Schwinggebildes. In diesem vollzieht sich die Einwirkung des Schalls auf das in dem bezeichneten Raum befindliche Substrat, vorwiegend flüssiger Form. Mit zunehmender Distanz zu den Schall-Austrittsflächen mindert sich die messbare wie die wirksame Energiedichte.

Die Gestaltung des Haupt-Reaktionsraums ist so vorgenommen, dass ein Raum entsteht, der geeignet ist, die Energiedichte in dem durch die Anordnung der Schwinggebilde entstehenden Reaktionsraum gezielt zu bündeln und zu erhöhen, zu konzentrieren. Durch das große Verhältnis des Reaktionsraumes bzgl. des Verhältnisses Tiefe (in Strömungsrichtung) und Höhe (90 Grad zur Strömungsrichtung) und die Anpassung der Breite des Gefäßes and die Dimension der Ultraschall-Sonotroden-Emitter und die damit verbundene auf einen zentralen Punkt gerichtete Hauptausbreitungsrichtung der Ultraschall Schwingungen wie der Plasmaentladungszone, erfolgt die Bündelung aller Reaktionen in einem Zentrum minimaler räumlicher Ausdehnung.

Die Einströmung der zu behandelnden Suspension oder Flüssigkeit ist so gestaltet, dass diese nahezu vollständig durch den gestalteten Reaktionsraum mit höchster Energiedichte geführt wird. Dadurch wird die Effizienz der beabsichtigten Beschallungsergebnisse deutlich erhöht. Die Dimension der Tiefe des Strömungsraumes ist so gewählt, dass die in den Strömungsraum einfließende Suspension bzw. Flüssigkeit vollständig durch den Raum des sich in Schwingungsrichtung hinter den Sonotroden bildenden Kavitationsbereichs geführt wird, wo sich auch bei Komplettierung mit Plasma Elektroden durch die konzentrische Ausrichtung aller Reaktionsrichtungen der Sonotroden wie Plasma Elektroden der Zwischenraum dieser aktiven Bauteile eine größtmögliche Energiedichte aufweist.

Durch die Ausdehnung der Hauptreaktionszone und die Konzentration der Energiedichte entsteht durch die Anpassung der Zustrom-Einrichtung, des Zuströmungskanals eine 100% ige Durchströmung der Hauptreaktionszone.

Durch die erforderliche Einwirkzeit wird die Primärgeschwindigkeit des zu behandelnden Substrates bestimmt. Vor dem Haupt-Reaktionsraum wird durch die enorme Querschnittserweiterung, die durch die mehrfache Größe der Höhenausdehnung des Haupt-Reaktionsraums im Verhältnis zur durchströmten Tiefe des Haupt-Reaktionsraums erfolgt, bewirkt eine starke Minderung der Fließgeschwindigkeit und verstärkt so den erforderlichen Energieeintrag in das zu behandelnde Substrat.

Neben einem Teil des Strömungsmediums, das direkt nach dem Durchqueren der Hauptreaktionszone aus dem Haupt-Reaktionsraum ausströmt, vollzieht der größte Teil des Strömungsmediums durch die Fließgeschwindigkeitsminderung eine Verwirbelung über den gesamten Querschnitt des Haupt-Reaktionsraums. Dieser Anteil des zu behandelnden Substrates wird wiederholt in den Hauptreaktionsraum strömen, um diesen in der durch die anliegenden Druck und Strömungsverhältnisse bestimmten Richtung zu verlassen.

Durch diese besonderen geschaffenen Bedingungen wird ein Schlupf des Substrates, das heißt ein Durchströmen des Haupt-Reaktionsraums ohne die Passage durch den Hauptreaktionsraum und damit verbundene Behandlung, ausgeschlossen.

Der Haupt-Reaktionsraum ist so geformt, dass sich bildende oder aus der zu behandelnden Flüssigkeit austretende Gase abgeführt werden können, ohne den Prozess zu stören oder die Behandlung zu unterbrechen. Das Entgasen des Reaktionsraumes wird auf diese Weise auch für die Inbetriebsetzung des Systems sowie bei intermittierendem Betrieb parallel zum Behandlungsvorgang störungsfrei parallel und automatisiert ermöglicht.

Der Haupt-Reaktionsraum hat eine senkrecht verlaufende Höhe, welche ein mehrfaches der horizontalen, der Durchströmungsrichtung entsprechenden Tiefe aufweist. Die Breite ist so ausgeführt, dass sie der Größe der einzusetzenden Sonotroden wie Elektroden entspricht und es in der Distanz zu den Außenwänden einen minimalen Abstand aufweist, der Ein- und Ausbau der Bauteile ermöglicht und andererseits entsprechend den Substrateigenschaften Verstopfungen verhindert.

Der Haupt-Reaktionsraum hat an der Unterseite einen horizontal verlaufenden, in Tiefe und Breite minimalst ausgeführten Boden. Dieser Boden ist mit einem Sedimente oder Fremdkörper-abführenden Ablauf versehen, welcher bedarfsgerecht bedient wird, im Betriebs Fall aber geschlossen ist.

An der Oberseite des Haupt-Reaktionsraums befindet sich ein Entnahmepunkt, welcher zur Abführung evtl. entstehender Gase bzw. sogenannter Entlüftung dient.

Über diese hier Installierte Entnahmeeinrichtung kann zusätzlich eine Bypass-Strömung abgeleitet bzw. zugeleitet werden und es kann eine Druckhaltung angeschlossen werden.

Durch die Anreihung mehrerer dieser Haupt-Reaktionsräume direkt Wand an Wand oder die Verbindung mittels kurzer Distanzrohre entsteht ein System aus beliebigen Reaktionsräumen für die Ultraschallbehandlung.

Damit ist eine modulare Anpassung an diverse Volumenströme und erforderliche Behandlungsdauer und Energieeintrags Anforderungen gegeben.

Das ganze System wird ergänzt durch ggf. erforderliche Vorbehandlungseinrichtungen und / oder Geräte zur Verbesserung der Homogenität des Substrates.

Dazu wird das System durch an das Substrat in seinen Eigenschaften wie dem erforderlichen Volumenstrom angepassten Substratfördereinrichtungen ergänzt. Hier handelt es sich um Pumpen verschiedener entsprechend den Substrateigenschaften einzusetzender Bauart.

In einem Automatisierungsteil wird die System-Überwachung, die Kommunikation mit davor und nachgelagerten Einrichtungen vorgenommen sowie die Steuerung der System eigenen Komponenten realisiert.

Um die Energiedichte und die Reaktionsfähigkeit des Systems zu erhöhen und die Effekte der Behandlung auf andere als nur sonotechnische Reaktionen auszudehnen wird zur weiteren Umschließung des Haupt-Reaktionsraums der Eintrag von Plasma-Entladungen durch die Anordnung entsprechender Elektroden in der Peripherie des Reaktionsraumes vorgenommen.

Diese Elektroden können zu unterschiedlichen Plasmasystemen, wie z.B. Spark-Plasma oder Mikrowellen-Plasma, gehören.

Durch diese Ergänzung wird nicht nur die Energiedichte, sondern auch die Reaktionsintensität und Effektivität erheblich gesteigert.

Die erfindungsgemäße Vorrichtung hat folgende Vorteile:
- Kombinierte Desintegration durch Plasma- und Ultraschall-Erreger, sowie deren einzelnen Einsatz zur Maximierung des Energieeintrags und der damit verbundenen Effekte zur Behandlung von Flüssigkeiten und Suspensionen in einem speziell gestalteten Reaktorgehäuse mit besonderen Eigenschaften zur Steigerung der Energiedichte.
- Der Haupt-Reaktionsraum wird durch die besondere Anordnung von Schwinggebilden und oder Plasma- Elektroden zur Erzeugung einer Hauptreaktionszone mit konzentrierter Energiedichte die durch die Überlagerung der Hauptausbreitungsrichtung des Ultraschalls und der Hauptentladungszone der Plasmaquelle mit direkter Einwirkung auf die zu behandelnde Suspension gestaltet.
- Zusätzlicher oberer Bereich des Reaktionsbehälters mit angeordneter Entgasungseinrichtung, um sich bildende bzw. abscheidende Gase abzuführen
- Besondere Gestaltung des Haupt-Reaktionsraums, die keinen Schlupf für in der Strömung befindliche Volumenanteile aus dem Haupt-Reaktionsraum mit höchster Energiedichte zulässt.
- Sammlung und Abführung von Sedimenten am Grund des Reaktionsraumes
- Wahlweise mehrere Ultraschallschwinggebilde zur Behandlung in einem gebündelten Behandlungs- bzw. Reaktionsraum der Suspension bzw. Flüssigkeit ist möglich.
- Die Anordnung von Ultraschall Schwinggebilden wird durch die Anordnung von Plasma Elektroden ergänzt oder ausgetauscht.
- Nur Plasmaelektroden können zur Erreichung der o.g. Ziele eingesetzt werden.
- Diagonal zur Durchströmungsrichtung angeordnete Anschlüssen zur Erzeugung von Über- bzw. Unterdruck aus angekoppelten Druckhaltungs-Systemen in dem beschriebenen Reaktionsraum sind möglich.

Erfindungsgemäß wird auch ein neuartiges Hybridgerät aus Ultraschall mit vorzugsweise kalter Plasmatechnologie bereitgestellt und dient zur insbesondere der Aufbereitung von Wasser. Das erfindungsgemäße Gerät ist ein stationäres und für bestimmte Anwendungen mobiles Ultraschall-Plasma-Hybridgerät für den Einsatz in der Wasseraufbereitung. Überraschenderweise hat sich herausgestellt, dass der mechanische Aufschluss von Bakterien sowie die Zersetzung von chemischen Verunreinigungen durch Ultraschall mit Plasma verstärkt wird, das ebenfalls mechanisch, überraschenderweise aber chemisch durch die Erzeugung von reaktiven kurzlebigen Bestandteilen auf schwer aufzubrechende biomolekulare Verbindungen einwirkt. Beide Verfahren - Ultraschall und Plasma - kommen gleichzeitig zum Einsatz. Nachfolgend sind in der Tabelle 1 die Grundlagen zu Ultraschall- und Plasmaverfahren kurzen und prägnanten Stichpunkten dargestellt.

**Tabelle 1: Grundlagen von Ultraschall und Plasma**

| Ultraschall | Plasma |
|---|---|
| • Aufschluss von Mikroorganismen und Zersetzung von Makromolekülen durch mechanische Wirkung (Kavitation), ausgelöst durch hochenergetische Schallwellen mit Mikroimplosionen | • elektrisch getriebene Entladungen |
| | • hohe Reaktivität bei bioverträglichen Temperaturen |
| | • Plasmen können in Flüssigkeiten eingesetzt werden und erzeugen reaktive Spezies z.B. OH-Radikale |
| • Agglomerate und Bakterienzellen werden aufgebrochen und einer weiteren Verfahrensstufe zur Dekontamination zugeführt | |
| | • Plasmen können thermodynamisch stabile Verbindungen aufspalten und Reaktionen mit hoher Aktivierungsenergie starten |
| • Mit der Wave-Box gibt es bereits positive Erfahrung bei der Aufbereitung von Gärmedien | • Plasmen sind gut skalierbar und werden daher in vielen Bereichen industriell eingesetzt (z.B. Ozonerzeugung) |
| • In der Abwassertechnik ist Hochleistungsultraschall seit mehr als 15 Jahren international eingeführt und entspricht dem DWA Standard | |

Die erfindungsgemäße Kombinationen von Ultraschall und Plasma wurde erfolgreich im Labormaßstab demonstriert. Dabei wurde eine Ultraschallquelle mit einer gepulsten elektrischen Entladung und als weitere Variante mit einem Mikrowellenplasma gekoppelt.

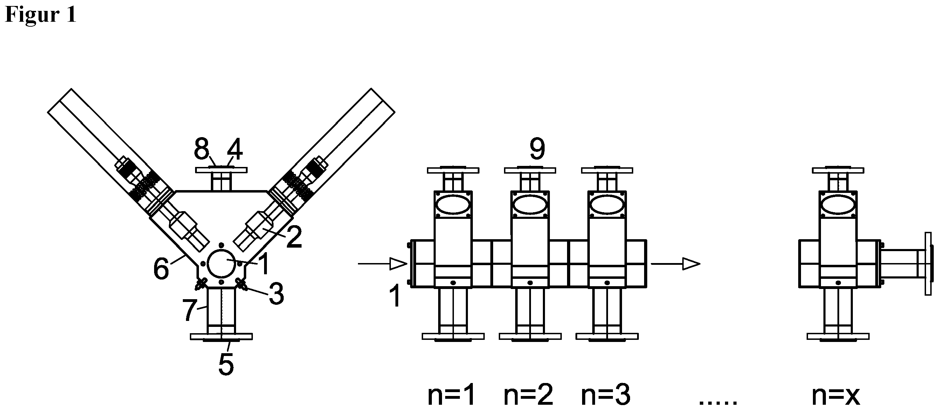

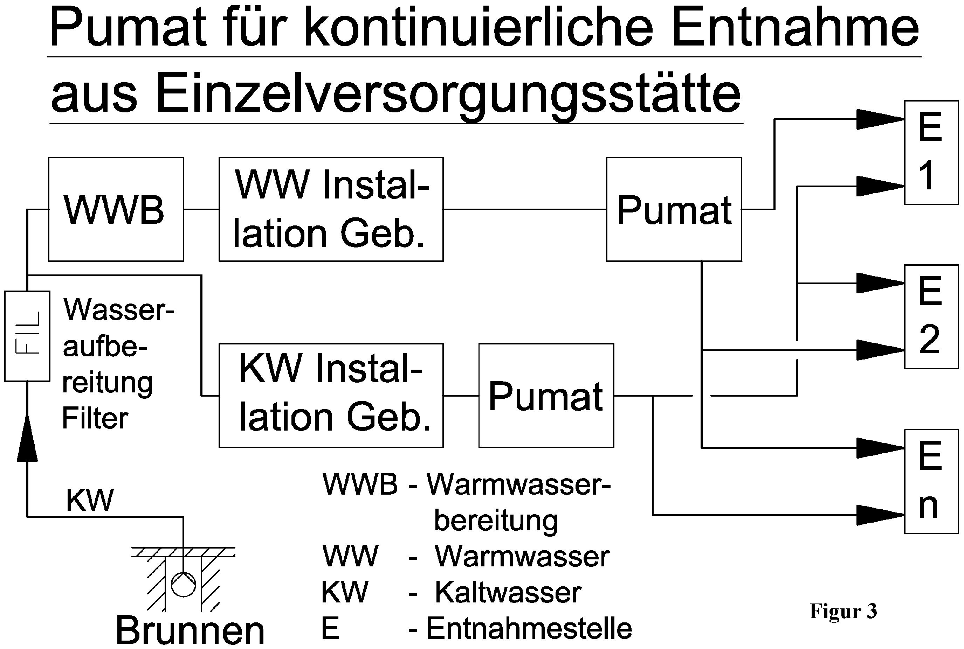

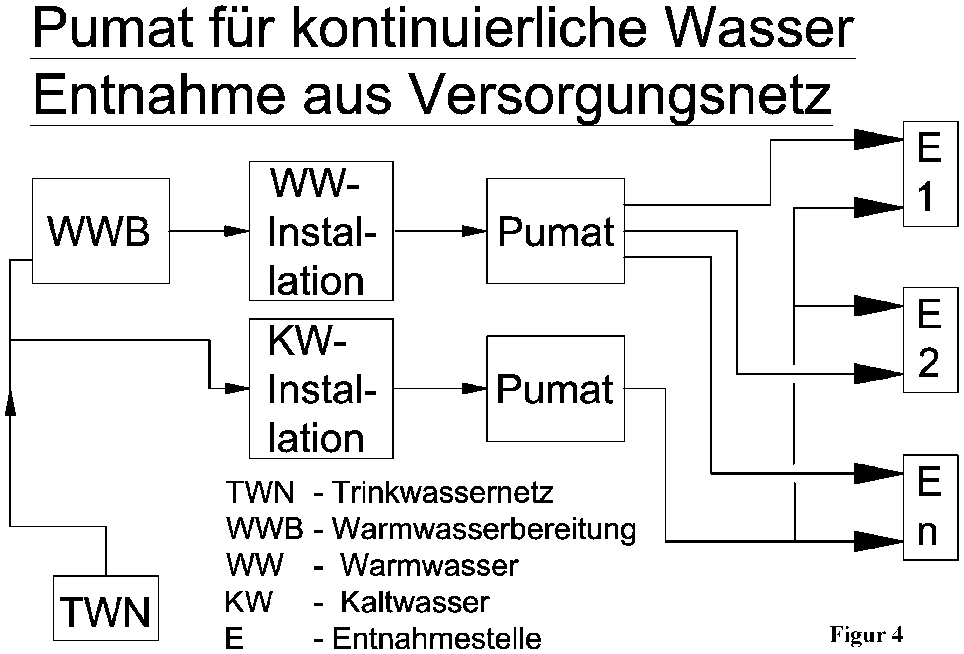

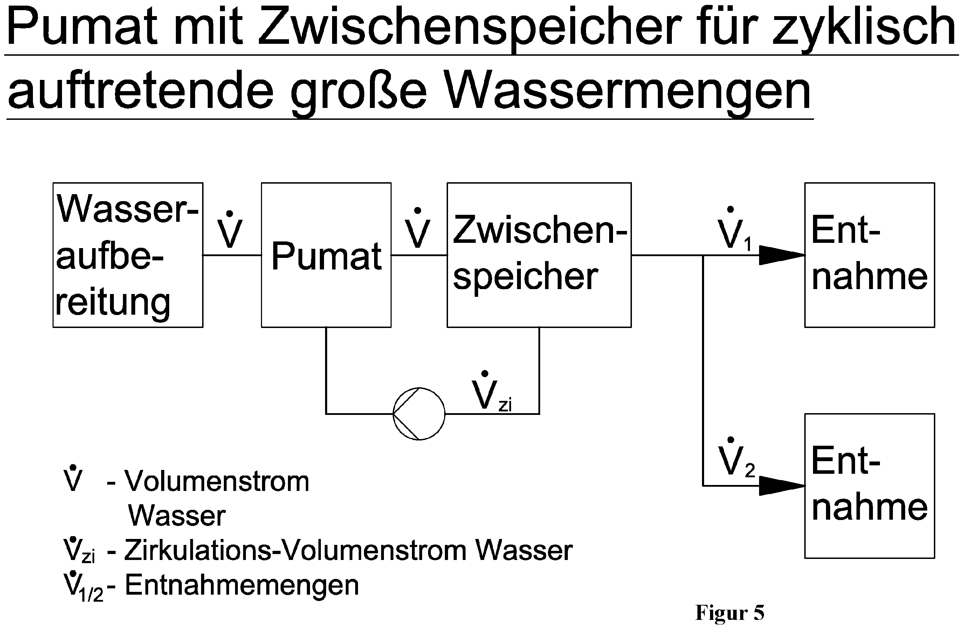

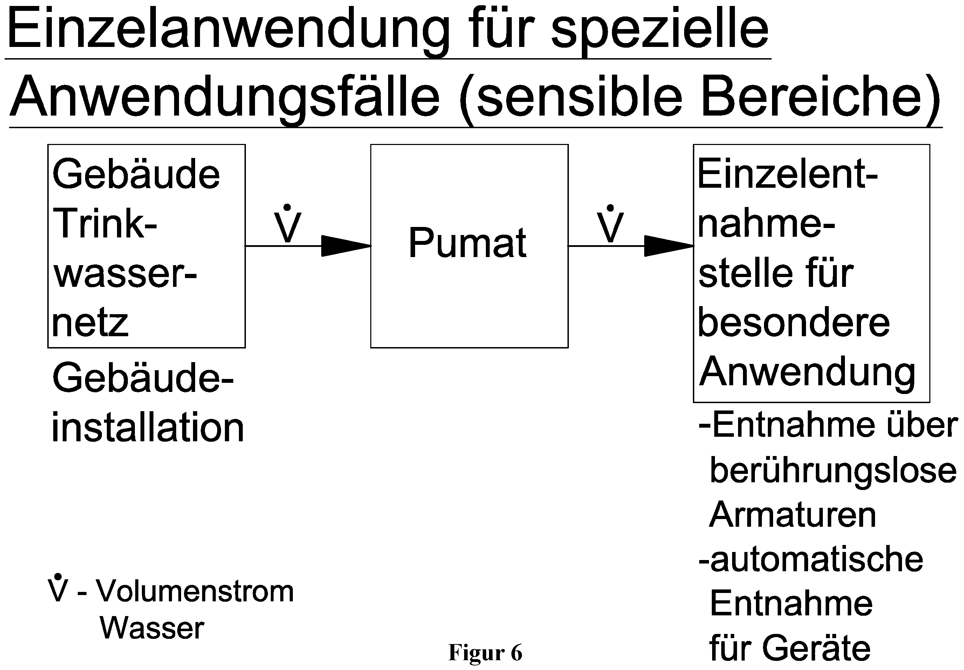

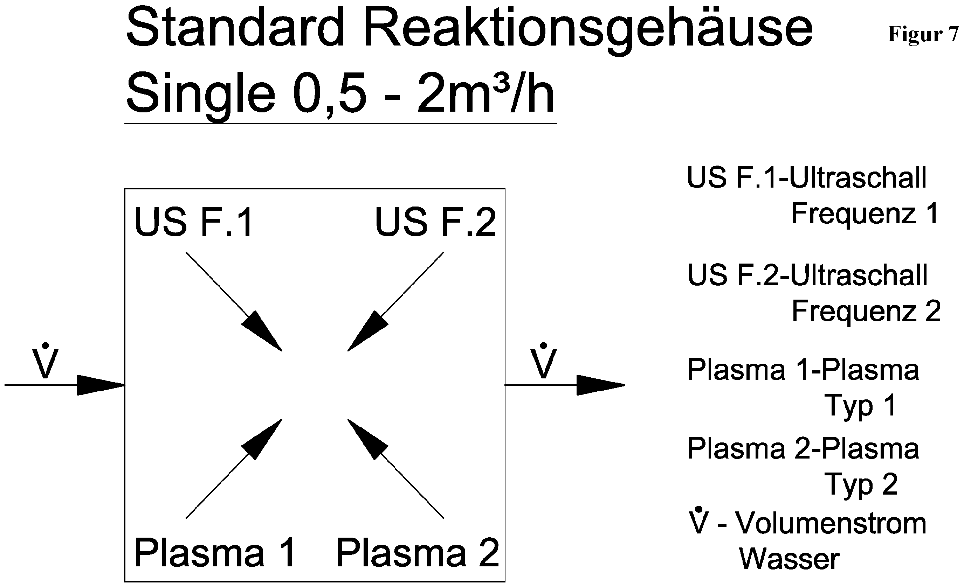

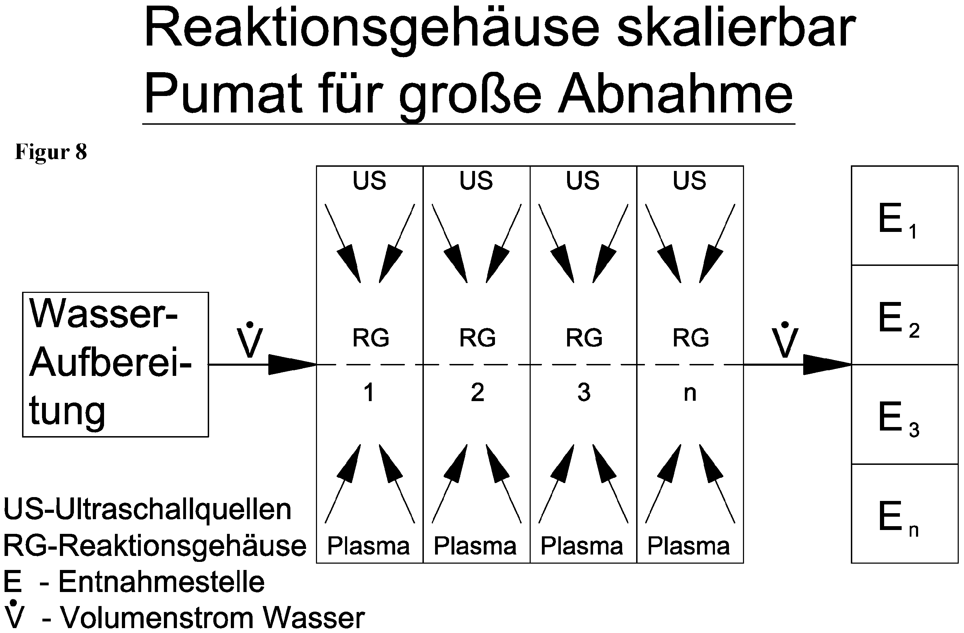

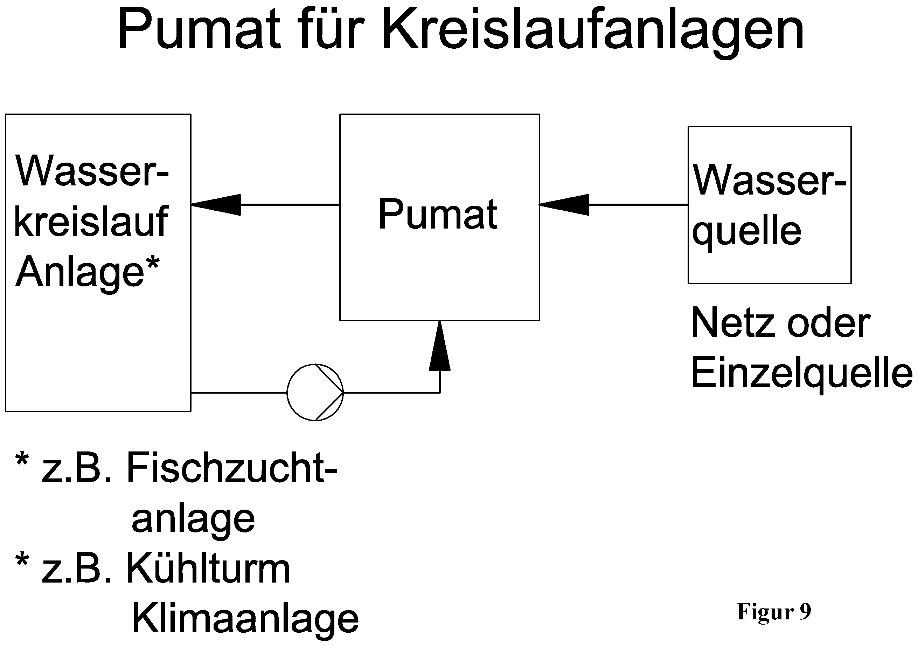

Die Erfindung soll nachfolgend anhand der Figuren 1 bis 10 näher erläutert werden, ohne die Erfindung auf diese Beispiele zu beschränken.

### Erläuterung zu den Figuren

Figur 1 zeigt den prinzipiellen Aufbau der erfindungsgemäßen Vorrichtung.

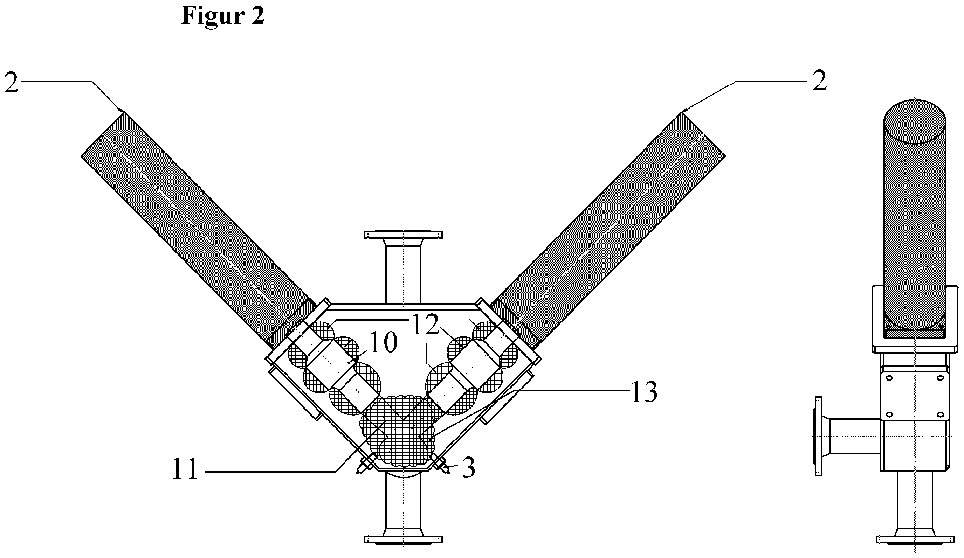

Figur 2 zeigt das Reaktorgehäuse mit den Reaktionszonen. Die Figur 2 stellt den Behandlungsraum mit der Kombination aus Ultraschall-Bauteilen und den Plasma-Elektroden dar. In dem Gehäuse befindet sich die zu behandelnde Flüssigkeit, welche den Reaktor von unten nach oben durchströmt. Alternativ ist auch eine seitliche Einströmung und seitliche plus oberer Abströmung möglich. Die Reaktionen und damit Behandlung der Flüssigkeiten auslösenden Bauteile sind die zur Plasma-Entladung dienenden Plasma Elektroden sowie die in die Flüssigkeit hinein schwingenden Bauteile der Ultraschall-Quelle.
   In Figur 2 werden die um den Ultraschall zu emittierende Ultraschall-Horn und die das Plasma bildende Entladung durch die Elektroden gezeigt. Die Anordnung der Bauteile ist so gestaltet, dass die räumliche Überlagerung der Hauptreaktionszonen eintritt und einen Haupt-Reaktionsraum im Reaktorgehäuse ausbildet. Die Durchströmung erfolgt mit gegenüber den Zuführungsleitungen und auch gegenüber bisherigen in Rohrleitungen geführten Sonotroden-Anordnungen sich einstellender verminderter Strömungsgeschwindigkeit, da sich der Durchströmungsquerschnitt im Reaktionsgehäuse stark vergrößert. Die Plasma Entladung überlagert sich mit der Ultraschall-Hauptrektionszone, die Ultraschall Hauptausrichtungszonen (bzgl. der maximal auftretenden Amplitude) der Ultraschall emittierenden Sonotroden-Bauteile überlagern sich ebenfalls räumlich. Ultraschall sowie Gesamt-Energie Intensität wird in den räumlich überlagernden Bereichen maximiert, die Behandlungszeit des Mediums in dem Reaktionsgehäuse und seinen Reaktionszonen wird optimiert, der Energieeintrag wird auf Grund dieser Faktoren maximal wirksam. Durch die Durchströmung des Reaktorgehäuses in vertikaler Richtung werden sich bei der Behandlung bildende Gase abgeleitet,
   Partikel mit geringerer Dichte als das Fluid werden ebenfalls in Fließrichtung sicher in der gewollten Strömungsrichtung abgeleitet. Thermodynamische Effekte werden zur Ausrichtung der Strömung in der gewünschten Fließrichtung ausgenützt und die Strömung sichert auch einen kontinuierlichen Energieeintrag aus den das Ultraschall Horn umgebenden Nebenreaktionszonen ab.
Figur 3 ist eine schematische Darstellung einer Anwendung des erfindungsgemäßen Hybridgerätes (hier - und in weiteren Figuren - als "PUMAT" bezeichnet) für eine kontinuierliche Entnahme von Wasser aus einer Einzelversorgungsstätte, beispielsweise eines Brunnens.
Figur 4 zeigt eine Anwendung für eine kontinuierliche Entnahme von Wasser aus dem Wasser-Versorgungsnetz, mit zwei Hybridgeräten - eines für Kaltwasser, eines für Warmwasser.
Figur 5 zeigt eine Anwendung für einen Zwischenspeicher mit zyklisch auftretenden großen Wassermengen.
In Figur 6 ist ein Schema für spezielle Anwendungsgebiete (sensible Bereiche) dargestellt.
Figur 7 zeigt den prinzipiellen Aufbau des erfindungsgemäßen Hybrid-Gerätes. Zwei Ultraschall-Erzeuger und zwei Plasma-Erzeuger sind so angeordnet, dass sowohl Ultraschall als auch die Plasma-Entladung auf denselben Bereich des Wasser-Volumenstroms gerichtet sind. Es können verschieden US-Frequenzen und / oder verschiedene Plasmen kombiniert werden. Die Durchflussrate des Wassers beträgt im bevorzugten Fall 0,5 bis 2 m³ / h.
Figur 8 zeigt schematisch mehrere Module.
In Figur 9 ist ein Reaktionsgehäuse des Hybrid-Gerätes für eine große Abnahme-Menge dargestellt.
Figur 10 zeigt eine Variante für Kreislaufanlagen, wie z.B. Klima-Anlagen oder Fischzucht.

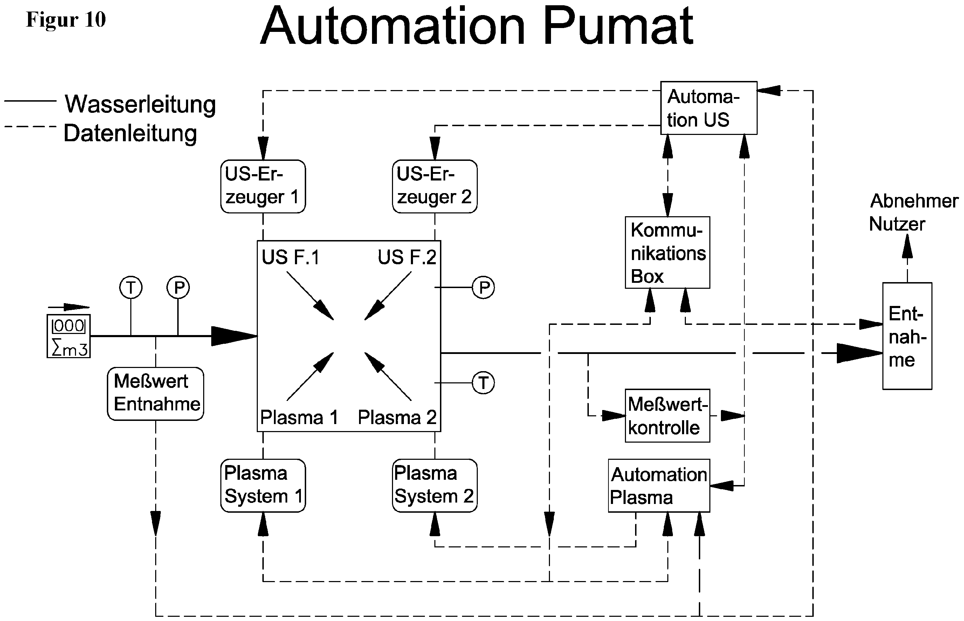

In Figur 10 ist ein automatisiertes Verfahren schematisch abgebildet. Mittels Messwerten werden die Parameter überprüft und die Ultraschall- bzw. Plasma-Erzeuger entsprechend gesteuert.

Der Hauptreaktionsraum ist so gestaltet ist, dass die Intensität des Ultraschalls durch die Überlagerung der Hauptschall-Ausbreitungszone bzgl. der größten Amplitude des Schwingungskörpers erhöht wird. Es erfolgt hier die Einwirkung der Plasmaentladungszone in die Ultraschall-Hauptausbreitungszone. Es entsteht die räumliche Überlagerung der Hauptreaktionsbereiche beider Quellen(Technologien). Durch diese Gestaltung werden die sonotechnischen Reaktionen aus der Ultraschalleinwirkung verstärkt, da die Ultraschall-Intensität in der sich räumlich überlagernden Hauptausbreitungszone mehrerer Ultraschallerreger/Sonden/Transducer erhöht wird. Ultraschallintensität und die Verweilzeit von Substratpartikeln oder Molekülen sind die Hauptfaktoren für die Steigerung von sonotechnischen Reaktionen/Effekten. Da es sich hier um ein Strömungsrohr besonderer Gestaltung handelt, kommen auch die Vorteile gegenüber der Ultraschall Wirkung in einem Rührkessel zum Tragen. Darüber hinaus erfolgt durch räumliche und damit auch energetische Integration der Plasmaentladungszone in die Ultraschallhauptausbreitungszone eine Verstärkung der plasmachemischen Reaktionen.

### Bezugszeichenliste (Figuren 1 und 2)

- 1: Zu- und Ab-Strömungsöffnung
- 2: Hochleistungs-Ultraschall- Erreger (Sonotrode)
- 3: Plasmaelektrode
- 4: Gas- Ableitungs- Einrichtung sowie alternative Flüssigkeitsabströmeinrichtung
- 5: Verbindungseinrichtung zu externen Drucksystemen
- 6: Reaktorgehäuse
- 7: Sedimentations- und Abführungsbereich
- 8: 2. Verbindungseinrichtung zu externen Druckhaltungssystemen
- 9: Reaktorgehäuse-Batterie
- 10: Ultraschall-Horn
- 11: Hauptreaktionszone Ultraschall
- 12: Nebenreaktionszonen Ultraschall
- 13: Entladungszone Plasma

## Patentansprüche

1. Vorrichtung zur gleichzeitigen Behandlung von Flüssigkeiten oder Suspensionen mittels Ultraschall und Plasma, umfassend mindestens ein Gerät zur Ultraschall-Erzeugung (2), **dadurch gekennzeichnet, dass** sich die Ultraschall-erzeugenden Geräte (2) sich in einem Hauptreaktionsraum innerhalb der Vorrichtung befinden, der so gestaltet ist, dass mindestens eine Raum-Dimension des Hauptreaktionsraums, die parallel zur Strömungsrichtung verläuft, dem Doppelten der Dimension senkrecht zur Strömungsrichtung entspricht, in dem die Behandlung durchgeführt wird und Reaktionszonen (11, 12, 13) gebildet werden, wobei die Ultraschall-erzeugenden Geräte (2) mit der zu behandelnden Suspension und / oder Flüssigkeit in direktem Kontakt stehen.

2. Vorrichtung nach Anspruch 1, **dadurch gekennzeichnet, dass** im Hauptreaktionsraum das Verhältnis von Tiefe zu Höhe mindestens 1:3 beträgt.

3. Vorrichtung nach Anspruch 1 oder 2, **dadurch gekennzeichnet, dass** sie zusätzlich mindestens ein Gerät zur Plasma-Erzeugung umfasst.

4. Vorrichtung nach Anspruch 3, **dadurch gekennzeichnet, dass** die Energien der Ultraschall-erzeugenden Geräte und der plasma-erzeugenden Geräte auf denselben Bereich einer strömenden Flüssigkeit gerichtet sind.

5. Vorrichtung nach Anspruch 3 oder 4, **dadurch gekennzeichnet, dass** die Geräte zur Ultraschall-Erzeugung (2) und die Geräte zur Erzeugung eines Plasmas (3) in die zu behandelnden Flüssigkeiten oder Suspensionen hineinragen.

6. Vorrichtung nach einem der Ansprüche 3 bis 5, **dadurch gekennzeichnet, dass** die Vorrichtung zwei oder mehr Geräte zur Ultraschall-Erzeugung und eine oder mehrere Vorrichtungen zur Erzeugung eines Plasmas aufweist.

7. Vorrichtung nach einem der Ansprüche 1 bis 6, **dadurch gekennzeichnet, dass** sie zusätzlich mindestens eines der folgenden Dinge umfasst:
- eine Gas- Ableitungs- Einrichtung und alternative zweite FlüssigkeitsabströmEinrichtung (4)
- eine Verbindungseinrichtung zu externen Drucksystemen (5)
- ein Reaktorgehäuse (6)
- einen Sedimentations- und Abführungsbereich (7)
- eine zweite Verbindungseinrichtung zu externen Druckhaltungssystemen (8)
- eine Reaktorgehäuse-Batterie (9)
- Vorbehandlungseinrichtungen wie Häcksler oder Cutter und / oder Geräte zur Verbesserung der Homogenität des Substrates wie Extruder oder andere mechanische Geräte
- Automatisierungsteil zur System-Überwachung und Kommunikation

8. Vorrichtung einem der Ansprüche 1 bis 7, **dadurch gekennzeichnet, dass** sie über Parameter, die in der strömenden Flüssigkeit oder Suspension gemessen werden, automatisch gesteuert wird.

9. Vorrichtung nach einem der Ansprüche 1 bis 8, **dadurch gekennzeichnet, dass** es sich bei den Ultraschall-erzeugenden Geräten (2) um Sonotroden, insbesondere um Stab-Sonotroden handelt, die vorzugsweise piezoelektrisch erzeugte Schwingung über Booster und Horn direkt in der strömenden Flüssigkeit / Suspension erzeugen.

10. Vorrichtung nach einem der Ansprüche 1 bis 9, **dadurch gekennzeichnet, dass** als Plasmen thermische oder nichtthermische Plasmaquellen dienen.

11. Vorrichtung nach Anspruch 10, **dadurch gekennzeichnet, dass** als thermische Plasmaquellen Lichtbögen oder thermisch Plasmajets, als nicht-thermische Plasmaquellen gepulste Funkenentladungen, dielektrisch behinderte Entladungen, Coronaentladungen oder Mikrowellenentladungen dienen.

12. Vorrichtung nach einem der Ansprüche 1 bis 11, **dadurch gekennzeichnet, dass** mehrere Gefäße hintereinander geschaltet werden oder mehrere Vorrichtungen über kurze Distanzstücke verbunden werden, so dass ein modulares und skalierbares System zur Konzentration der Energiedichte für eine kombinierte Hochleistungs-Ultraschall- und Plasmabehandlung von Suspensionen und / oder Flüssigkeiten gebildet wird.

13. Verfahren zur gleichzeitigen Ultraschall- und Plasma-Behandlung von Flüssigkeiten oder Suspensionen mittels der Vorrichtung gemäß einem der Ansprüche 1 bis 12, **dadurch gekennzeichnet, dass** infolge der Dimensionierung innerhalb eines Raumes der Vorrichtung eine Fließgeschwindigkeitsminderung auftritt und an dieser Stelle eine konzentrierte Behandlung der Suspensionen und / oder Flüssigkeiten mittels Ultraschall und Plasma erfolgt, ohne dass ein Schlupf des Substrates entsteht.

14. Verwendung der Vorrichtung nach einem der Ansprüche 1 bis 12 zur Behandlung von Trink- oder Brauchwasser oder in der Fischzucht.

15. Verwendung der Vorrichtung nach einem der Ansprüche 1 bis 12 in einer Biogasanlage oder in Klima- oder-Kläranlagen.
